# EUROPEAN PATENT APPLICATION

(11) **EP 4 632 767 A1**
(43) Date of publication of application: **15.10.2025**
(21) Application number: 23900658.8
(22) Date of filing: 05.12.2023
(51) Int. Cl.: H01B 7/02

(54) **FLAT INSULATED ELECTRIC WIRE**

(30) Priority: 08.12.2022 CN 202211573338
(71) Applicant: AGC INC., Chiyoda-ku, Tokyo 1008405 (JP)
(72) Inventor: ZHAO, Tingting, Tokyo 100-8405 (JP); LI, Haoyuan, Tokyo 100-8405 (JP); CHENG, Chen, Tokyo 100-8405 (JP); HONDA, Makoto, Tokyo 100-8405 (JP)
(74) Representative: Müller-Boré & Partner Patentanwälte PartG mbB
(86) International application number: PCT/JP2023/043472
(87) International publication number: WO 2024/122543

(57) **Abstract**

The present disclosure includes a flat conductor and a fluororesin insulating layer that covers the flat conductor. The fluororesin insulating layer contains a fluorine-containing polymer (A) having a carbonyl-containing group, a fluorine-containing polymer (B) having no carbonyl-containing group, and a metal oxide. The fluorine-containing polymer (A) is a hot-melt tetrafluoroethylene copolymer having a carbonyl-containing group. The carbonyl-containing group is at least one selected from a group having a carbonyl group between carbon atoms of a hydrocarbon group, a carbonate group, a carboxyl group, an alkoxycarbonyl group, or an anhydride residue. The blending amount of the fluorine-containing polymer (A) is from 10 to 25 parts by mass with respect to 100 parts by mass of the fluorine-containing polymer (B), and the mass ratio of the fluorine-containing polymer (A) to the metal oxide is from 3.5 : 1 to 5.5 : 1.

## Description

### Technical Field

The present disclosure relates to the field of insulated electric wires, and more particularly to a flat insulated electric wire in which a flat conductor is covered with a fluororesin insulating layer.

### Background Art

As energy and environmental problems become more serious, attention and awareness of electric vehicles are increasing. In recent years, the development of domestic electric vehicles has been remarkable, and vehicle motors are also continuously innovated, and essential accessory materials for vehicle motors also require continuous research and development to adapt to new vehicle environments. Since the driving environment of a motor for driving a vehicle is likely to change, and wide speed adjustment is required, enameled copper flat wires are currently frequently used, and an enameled copper flat wire having a higher overload capacity is required. During motor operation, high-frequency pulse harmonics due to frequency control devices, inverters, current switching power supplies, other current conversion devices, and the like frequently affect the insulating layer, as a result of which the insulating layer is rapidly damaged. For this reason, current enameled flat wires for high-voltage vehicle motors usually have problems in that the enameled flat wires are torn by bending, the enameled layers are easily broken during high-voltage corona discharge, the heat dissipation efficiency is low, the strength is reduced after thermal aging, the enameled layers have a low strength and are easily broken, and the service life is shortened under water and oil environments. Simultaneously, repetitive innovations in electrical technology expect the space factor of accessories to further increase and require the insulating layer to be thinner while maintaining the same or higher insulation performance as before.

### SUMMARY OF INVENTION

### Technical Problem

Current enamel magnet wires with polyimide (PI), polyetherimide (PEI) or the like as an insulating material cannot simultaneously satisfy such high requirements. Therefore, there is a demand for magnet wire products that are excellent in all of insulation properties, aging resistance, corrosion resistance, adhesion, and bending resistance that can be applied to new energy vehicles, at present, with the new energy vehicle industry rapidly developing.

An object of an embodiment of the present invention is to provide a flat insulated electric wire that has excellent insulation properties, aging resistance, and corrosion resistance, and simultaneously has excellent bending resistance and adhesion between the insulating layer and the flat wire conductor as compared with a conventional insulating material.

### Solution to Problem

The present disclosure has the following technical details.
[1] A flat insulated electric wire including a flat conductor having a substantially rectangular cross section, and a fluororesin insulating layer covering the flat conductor, in which the fluororesin insulating layer contains a fluorine-containing polymer (A) having a carbonyl-containing group, a fluorine-containing polymer (B) having no carbonyl-containing group, and a metal oxide,
   the fluorine-containing polymer (A) is a hot-melt tetrafluoroethylene copolymer having a carbonyl-containing group, and the carbonyl-containing group is at least one selected from a group having a carbonyl group between carbon atoms of a hydrocarbon group, a carbonate group, a carboxyl group, an alkoxycarbonyl group, or an anhydride residue,
   the blending amount of the fluorine-containing polymer (A) is from 10 to 25 parts by mass with respect to 100 parts by mass of the fluorine-containing polymer (B), and
   the mass ratio of the fluorine-containing polymer (A) to the metal oxide is from 3.5 : 1 to 5.5 : 1.
[2] The flat insulated electric wire according to [1], in which a mass ratio of the fluorine-containing polymer (A) to the metal oxide is from 4 : 1 to 5 : 1.
[3] The flat insulated electric wire according to [1], in which the blending amount of the metal oxide is from 2 to 5 parts by mass with respect to 100 parts by mass of the blending amount of the fluorine-containing polymer (B).
[4] The flat insulated electric wire according to [1], in which the fluororesin insulating layer is formed by extruding a mixture containing a resin of the fluorine-containing polymer (A), a resin of the fluorine-containing polymer (B), and a powder of the metal oxide.
[5] The flat insulated electric wire according to any one of [1] to [4], in which the fluorine-containing polymer (A) is a polymer containing a constituent unit (a1) based on tetrafluoroethylene, a constituent unit (a2) based on a monomer having a carbonyl-containing group, and a constituent unit (a3) based on a fluorine-containing monomer other than tetrafluoroethylene.
[6] The flat insulated electric wire according to [5], in which the monomer having a carbonyl-containing group is a cyclic hydrocarbon compound having an anhydride residue and a polymerizable unsaturated bond.
[7] The flat insulated electric wire according to [5], in which, in the fluorine-containing polymer (A), the proportion of the constituent unit (a1) based on tetrafluoroethylene is from 90 to 99.89 mol%, the proportion of the constituent unit (a2) based on a monomer having a carbonyl-containing group is from 0.01 to 3 mol%, and the proportion of the constituent unit (a3) based on a fluorine-containing monomer other than tetrafluoroethylene is from 0.1 to 9.99 mol%, relative to the total of all units constituting the fluorine-containing polymer (A).
[8] The flat insulated electric wire according to any one of [1] to [4], in which the fluorine-containing polymer (A) has a melting point of from 280°C to 320°C and is melt- moldable.
[9] The flat insulated electric wire according to any one of [1] to [4], in which the fluorine-containing polymer (A) has a melt flow index of from 5 to 35 g/10 min.
[10] The flat insulated electric wire of [10] according to any one of [1] to [4], in which the fluorine-containing polymer (B) is at least one selected from the group consisting of ETFE, FEP, PFA, ECTFE, PCTFE, and PVDF.
[11] The flat insulated electric wire according to any one of [1] to [4], in which the metal oxide is at least one selected from the group consisting of CuO, ZnO, MgO, Cu₂O, Fe₃O₄, MnO₂, and CrO.
[12] The flat insulated electric wire according to [2] or [3], in which a powder of the metal oxide has an average particle size of from 0.1 to 5 µm.
[13] The flat insulated electric wire according to any one of [1] to [4], in which the fluororesin insulating layer has a thickness of from 50 to180 µm.
[14] The flat insulated electric wire according to any one of [1] to [4], in which the flat conductor is formed from aluminum, an aluminum alloy, copper, or a copper alloy. Advantageous Effects of Invention

According to an embodiment of the present disclosure, it is possible to provide a flat insulated electric wire that has excellent insulation properties, aging resistance, and corrosion resistance, simultaneously has excellent adhesion between the insulating layer and the flat wire conductor as compared with a conventional insulating material, and has excellent bending resistance.

Other aspects, features, and advantages of the disclosure will become apparent from the following detailed description.

### DESCRIPTION OF EMBODIMENTS

The meanings of the following terms herein are as follows.

A "unit" in a polymer may be an atomic group directly formed with a monomer by a polymerization reaction, or may be an atomic group formed by subjecting a polymer obtained by a polymerization reaction to a treatment by a predetermined method to convert a part of the structure of the polymer. A unit based on a monomer A is also referred to as a monomer A unit.

An "average particle diameter (D50)" refers to a diameter at a volume-based cumulative 50% of particles obtained by a laser diffraction and scattering method. That is, the particle size distribution of particles is measured by a laser diffraction and scattering method, a cumulative curve is obtained with the total volume of the particles as 100%, and the particle diameter at the point where the cumulative volume reaches 50% on the cumulative curve is determined.

A "melting temperature (melting point) of a polymer" refers to a temperature corresponding to the maximum value of the melting peak of the polymer measured by differential scanning calorimetry (DSC).

A "relative permittivity" is a value measured by a SPDR (Separated Dielectric Resonator) method at a frequency of 1 MHz under an environment with 23°C ± 2°C and 50% ± 5% RH.

### [Flat Insulated Electric Wire]

The flat insulated electric wire (hereinafter, also referred to as an "insulated electric wire" or an "insulated flat wire") of the disclosure includes a flat conductor having a substantially rectangular cross section, and a fluororesin insulating layer covering the flat conductor.

In view of the technical problems existing in the prior art, the present inventors have conducted intensive studies and found the following: It is possible to obtain a flat magnet wire that has excellent insulation properties, heat resistance, corona resistance, and automatic transmission fluid (ATF) resistance by using a fluorine-containing polymer as an insulating layer material for a flat wire coil used in a motor for a new energy vehicle. It is possible to further enhance the performance such as a partial discharge inception voltage (PDIV), corona resistance, and withstand voltage fracture property of the flat wire insulating layer by mixing a certain amount of a fluorine-containing polymer having a special group with a metal oxide. Simultaneously, the synergistic effect of the fluorine-containing polymer having a special group and the metal oxide further strengthens the adhesion between the insulating layer and the flat wire conductor, and significantly enhances the bending resistance and workability, which is further advantageous for requirements in processing such as bending, slot machining, and welding in a subsequent step for the flat wire.

### (Flat Conductor)

Examples of the flat conductor used in the disclosure can include a conductor with a substantially rectangular cross section. That is, the cross section of the conductor is substantially rectangular, in which the corners of the rectangle may be right angles or may be chamfered and rounded, and is preferably rectangular with rounded corners. In a case in which the cross-section is rectangular with rounded corners, the curvature radius r of the fillet is preferably from 0.1 to 0.5 mm, more preferably from 0.2 to 0.5 mm, and particularly preferably 0.3 mm.

In the cross section of the flat conductor, the length of the long side is preferably from 0.1 to 5 mm, and the length of the short side is preferably from 0.01 to 3 mm. The ratio (aspect ratio) of the length of the long side to the length of the short side is not particularly limited as long as it is 1 or more, and is preferably from 2 to 10, and more preferably from 2 to 5.

The material of the flat conductor is not particularly limited as long as the conductivity is favorable, and is preferably formed from aluminum, an aluminum alloy, copper, or a copper alloy, and particularly preferably copper. The flat conductor may contain a trace amount of oxygen, with an oxygen content preferably of 50 ppm or less, and more preferably 20 ppm or less, and particularly preferably, the flat conductor contains no oxygen.

### (Fluororesin Insulating Layer)

In the flat insulated electric wire of the disclosure, the fluororesin insulating layer covering the flat conductor includes a fluorine-containing polymer (A) having a carbonyl-containing group, a fluorine-containing polymer (B) having no carbonyl-containing group, and a metal oxide.

### < Fluorine-Containing Polymer (A) >

The fluorine-containing polymer (A) is a hot-melt tetrafluoroethylene copolymer having a carbonyl-containing group, which is a hot-melt copolymer having a tetrafluoroethylene unit as a main structural unit in the polymer main chain and having a carbonyl-containing group.

The carbonyl-containing group in the fluorine-containing polymer (A) of the disclosure may be contained in a unit based on a monomer having a carbonyl-containing group (hereinafter, also denoted as a "polar monomer"), may be contained in an end group of the polymer, or may be incorporated into the polymer by a surface treatment (e.g., radiation treatment, electron beam treatment, corona treatment, or plasma treatment). The carbonyl-containing group is particularly preferably contained in the unit of the polar monomer. The carbonyl-containing group may be a group obtained by modifying a polymer having a group capable of forming a carbonyl group. The carbonyl-containing group contained in an end group of the polymer can also be obtained by adjusting a component (e.g., a polymerization initiator, a chain transfer agent) for polymerization for the polymer.

The carbonyl-containing group is a group containing a carbonyl group (>C(O)). The carbonyl-containing group is preferably at least one selected from the group consisting of a group having a carbonyl group between carbon atoms of a hydrocarbon group, a carbonate group (-OC(O)O-), a carboxyl group, an alkoxycarbonyl group, and an anhydride residue(-C(O)OC(O)-).

The carbonyl-containing group is more preferably a cyclic carbonyl-containing group, that is, a cyclic anhydride residue or a cyclic carbonate group, and most preferably a cyclic anhydride residue, from the perspective of further excellent adhesion and crack resistance (appearance), and hardly impairing the physical properties of the fluorine-containing polymer (B) contained in the insulating covering layer. These cyclic carbonyl-containing groups may be at least partially ring-opened.

Examples of the hydrocarbon group formed by incorporating a carbonyl group between carbon atoms of the hydrocarbon group can include an alkylene group having from 2 to 8 carbon atoms. The number of carbon atoms of the alkylene group refers to the number of carbon atoms in a portion other than the carbonyl group of the alkylene group. The alkylene group may be linear or branched.

The alkoxy group in the alkoxycarbonyl group may be linear or branched. The alkoxy group is preferably an alkoxy having from 1 to 8 carbon atoms, and particularly preferably a methoxy group or an ethoxy group.

The content of the carbonyl-containing group in the fluorine-containing polymer (A) is preferably from 10 to 60,000 groups, more preferably from 100 to 50,000 groups, still more preferably from 100 to 10,000 groups, and particularly preferably from 300 to 5000 groups, with respect to 1×10⁶ main chain carbon atoms in the fluorine-containing polymer (A). When the content of the carbonyl-containing group is within this range, the adhesion to the flat conductor is further enhanced.

The content of the carbonyl-containing group can be measured by nuclear magnetic resonance (NMR) analysis, infrared absorption spectroscopy, or the like. For example, the proportion (mol%) of a constituent unit having a carbonyl-containing group in all constituent units constituting the fluorine-containing polymer (A) is determined using a method such as infrared absorption spectroscopy, as described in Japanese Patent Application Laid-Open (JP-A) No. 2007-314720, and the content of the carbonyl-containing group can be calculated from the above proportion.

The fluorine-containing polymer (A) of the disclosure is preferably a polymer containing a constituent unit (a1) based on tetrafluoroethylene (TFE), a constituent unit (a2) based on a monomer having a carbonyl-containing group, and a constituent unit (a3) based on a fluorine-containing monomer other than TFE.

The proportion of the constituent unit (a1) based on TFE to the proportion of all units constituting the fluorine-containing polymer (A) is preferably from 50 to 99 mol%, and particularly preferably from 90 to 99.8 mol%. When the content of the constituent unit based on TFE is equal to or more than the lower limit of this range, the electrical properties (e.g., low relative permittivity), heat resistance, chemical resistance, and the like of the fluorine-containing polymer (A) are excellent. When the content of the TFE unit is equal to or less than the upper limit of the range, the melt moldability, stress crack resistance and the like of the fluorine-containing polymer (A) are excellent.

Examples of the monomer having a carbonyl-containing group can include a cyclic hydrocarbon compound having an anhydride residue and a polymerizable unsaturated bond (hereinafter, also referred to as a "monomer (m11)"), a monomer having a carboxyl group and a polymerizable unsaturated bond (hereinafter, also referred to as a "monomer (m12)"), a vinyl ester, a (meth)acrylate, and CF₂=CFOR^{f1}COOX¹, in which R^{f1} is a perfluoroalkylene having from 1 to 10 carbon atoms and optionally containing an ether oxygen atom, and X¹ is an alkyl group having from 1 to 3 carbon atoms. Among the above, the monomer having a carbonyl-containing group is particularly preferably a cyclic hydrocarbon compound having an anhydride residue and a polymerizable unsaturated bond.

Examples of the monomer (m11) can include an anhydride of an unsaturated dicarboxylic acid. Examples of the anhydride that is an unsaturated dicarboxylic acid can include itaconic anhydride (hereinafter, also denoted as "IAH"), citraconic anhydride (hereinafter, also denoted as "CAH"), 5-norbornene-2,3-dicarboxylic anhydride (another name is nadic anhydride; hereinafter, also denoted as "NAH"), and maleic anhydride.

Examples of the monomer (m12) can include unsaturated dicarboxylic acids such as itaconic acid, citraconic acid, 5-norbornene-2,3-dicarboxylic acid, and maleic acid; and unsaturated monocarboxylic acids such as acrylic acid and methacrylic acid.

Examples of the vinyl ester can include vinyl acetate, vinyl chloroacetate, vinyl butyrate, vinyl pivalate, and vinyl benzoate.

Examples of the (meth)acrylate can include (polyfluoroalkyl)acrylate and (polyfluoroalkyl)methacrylate.

The monomer having a carbonyl-containing group is preferably the monomer (m11) from the perspective of enhancing thermal stability and adhesion to metals. Among the above, the monomer having a carbonyl-containing group is particularly preferably IAH, CAH, or NAH.

The proportion of the constituent unit (a2) based on the monomer having a carbonyl-containing group to the proportion of all units constituting the fluorine-containing polymer (A) is preferably from 0.01 to 5 mol%, and particularly preferably from 0.01 to 3 mol%. When the content of the monomer having a carbonyl-containing group is within this range, the adhesion between the fluorine-containing polymer (A) and the flat conductor is more excellent.

The constituent unit (a3) based on a fluorine-containing monomer other than TFE is preferably a unit based on hexafluoropropylene (HFP), perfluoro(alkyl vinyl ether) (PAVE), or fluoroalkyl ethylene (FAE) (hereinafter, a unit based on any of these monomers is also referred to as a "PAE unit").

The PAVE unit and the HFP unit are preferable as a PAE unit, and the PAVE unit is particularly preferable. The fluorine-containing polymer (A) may have two or more kinds of PAE units.

Examples of the PAVE can include CF₂=CFOCF₃(PMVE), CF₂=CFOCF₂CF₃, CF₂=CFOCF₂CF₂CF₃(PPVE), CF₂=CFOCF₂CF₂CF₂CF₃, and CF₂=CFO(CF₂)₈F, and the PAVE is preferably PMVE and PPVE.

Examples of the FAE can include CH₂=CH(CF₂)₂F (PFEE), CH₂=CH(CF₂)₃F, CH₂=CH(CF₂)₄F (PFBE), CH₂=CF(CF₂)₃H, and CH₂=CF(CF₂)₄H, and PFBE or PFEE is preferable.

The proportion of the PAE unit to all units constituting the fluorine-containing polymer (A) is preferably from 0.1 to 10 mol%, and particularly preferably from 0.1 to 9.99 mol%. When the content of the PAE unit is within this range, the fluorine-containing polymer (A) has excellent moldability.

In some preferred embodiments of the disclosure, in the fluorine-containing polymer (A) of the disclosure, the proportion of the constituent unit (a1) based on TFE is from 90 to 99.89 mol%, the proportion of the constituent unit (a2) based on the monomer having a carbonyl-containing group is from 0.01 to 3 mol%, and the proportion of the constituent unit (a3) based on a fluorine-containing monomer other than TFE is from 0.1 to 9.99 mol%, relative to the total of all units constituting the fluorine-containing polymer (A).

The fluorine-containing polymer (A) is a hot-melt polymer, and the melting temperature, that is, the melting point thereof is preferably 260°C or higher, more preferably from 260 to 320°C, still more preferably from 280 to 320°C, particularly preferably from 295 to 315°C, and most preferably from 295 to 310°C. In this case, the heat adhesive property of the fluorine-containing polymer (A) and the fluorine-containing polymer (B) are balanced, and the physical properties of the insulating covering layer are more easily enhanced. In addition, when the melting point is equal to or higher than the lower limit described above, mechanical properties such as abrasion resistance, tensile strength, tensile elongation, and elastic modulus are excellent; when the melting point is equal to or lower than the upper limit, molding by extrusion molding is easy, and the moldability is excellent.

The fluorine-containing polymer (A) of the disclosure is preferably melt moldable. The "melt moldable" means that melt flowability is exhibited. The "melt flowability is exhibited" means that there is a temperature at which the melt flow rate is from 0.1 to 1000 g/10 min at a high temperature higher by 20°C or more than the melting point of a resin under the condition of a load of 49 N.

The melt flow index (MFR) of the fluorine-containing polymer (A) in the disclosure is preferably from 5 to 35 g/10 min, and more preferably from 10 to 30 g/10 min. The MFR is a value obtained by measurement by a method in accordance with ASTM D-3307. The MFR in the disclosure is defined as the value obtained by measuring the mass (g) of the fluorine-containing polymer (A) ejected from a nozzle with a diameter of 2 mm and a length of 8 mm in 10 minutes at a measurement temperature of 372°C under a load of 49 N using a melt indexer (e.g., manufactured by Toyo Seiki Seisaku-sho, Ltd.). The melting point of the melt-moldable fluorine-containing polymer (A) is preferably from 280 to 320°C, particularly preferably from 295 to 315°C, and most preferably from 295 to 310°C.

The MFR is an indicator of the molecular weight of the fluorine-containing polymer (A): a larger MFR indicates a smaller molecular weight, while a smaller MFR indicates a larger molecular weight. The molecular weight, and the MFR consequently, can be adjusted by production conditions of the fluorine-containing polymer (A). For example, in a case in which the polymerization time of monomer polymerization is shortened, the MFR tends to increase.

Specific examples of the fluorine-containing polymer (A) can include a polymer described in WO 2018/16644 A.

### < Fluorine-Containing Polymer (B) >

The fluorine-containing polymer (B) is a homopolymer of a fluorine-containing monomer that does not have the carbonyl-containing group as described above, or a copolymer of a fluorine-containing monomer and another polymerizable monomer.

Examples of the fluorine-containing polymer (B) can include an ethylene/tetrafluoroethylene copolymer (ETFE), a tetrafluoroethylene/hexafluoropropylene copolymer (FEP), a tetrafluoroethylene/perfluoro(alkyl vinyl ether) copolymer (PFA), an ethylene/chlorotrifluoroethylene copolymer (ECTFE), polychlorotrifluoroethylene (PCTFE), and polyvinylidene fluoride (PVDF). These fluorine-containing polymers may be used singly or in combination of two or more kinds thereof. Use of such a fluorine-containing polymer (B) is preferable because this makes it possible to obtain an insulating covering material that has excellent insulation properties, heat resistance, corona resistance, and ATF oil resistance. The fluorine-containing polymer (B) is preferably at least one selected from the group consisting of ETFE, FEP, PFA, ECTFE, PCTFE, and PVDF, more preferably at least one selected from the group consisting of PFA, ETFE, and FEP, and particularly preferably at least one selected from the group consisting of PFA and ETFE, from the perspective of obtaining an insulated electric wire having excellent bending resistance and stability in a partial discharge test.

The fluorine-containing polymer (B) is preferably a polymer with a melting point of 260°C or higher from the perspective of obtaining an insulating layer material having excellent heat resistance.

The fluorine-containing polymer (B) has a relative permittivity of preferably 2.8 or less, and more preferably 2.5 or less, from the perspective of obtaining an insulating layer material having excellent insulation properties.

### < Metal Oxide >

The fluororesin insulating layer of the flat insulated electric wire of the disclosure contains a metal oxide. As the metal oxide, at least one selected from the group consisting of CuO, ZnO, MgO, Cu₂O, Fe₃O₄, MnO₂, and CrO is suitably used.

Incorporation of the metal oxide in the fluororesin insulating layer reduces change in the physical properties of the fluororesin during a melt-kneading treatment and extruding, and suppresses decomposition of the fluororesin and the like, and thus, the metal oxide acts as a heat stabilizer. In addition, during a melt-kneading treatment and extruding, the metal oxide and the carbonyl-containing group of the fluorine-containing polymer (A) act synergistically as a cross-linking junction, the affinity between the fluorine-containing polymer (A) and the flat conductor is increased, the adhesion between the fluorine-containing polymer (A) and the flat conductor is enhanced, and the fluororesin insulating layer and the flat wire conductor are more firmly joined, as a result of which the bending resistance and workability of the insulated electric wire can be significantly enhanced.

The metal oxide is preferably at least one selected from the group consisting of CuO, MgO, Cu₂O, and CrO from the perspective of further suppressing decomposition of the fluororesin during a melt-kneading treatment and extruding step and enhancing the adhesion between the fluororesin insulating layer and the flat wire conductor.

The metal oxide is preferably blended as a powder with a mixture of the fluorine-containing polymer (A) and the fluorine-containing polymer (B) from the perspective of obtaining workability by which a melt-kneading step is easy and a uniform melt-kneaded product can be obtained, and obtaining favorable appearance and adhesion. The average particle size of a powder of the metal oxide is preferably from 0.01 to 10 µm, and more preferably from 0.1 to 5 µm. It is still more preferably from 1 to 3 µm.

### < Other Components >

The fluororesin insulating layer of the flat insulated electric wire of the disclosure can contain other components in addition to the fluorine-containing polymer (A), the fluorine-containing polymer (B), and the metal oxide mentioned above in the range that does not impair the effects of the disclosure. Examples of other components can include a resin other than the fluorine-containing polymer (A) and the fluorine-containing polymer (B), and an additive other than the metal oxide.

Examples of another resin can include thermosetting resins (e.g., an epoxy resin, a thermosetting polyimide resin, a polyimide precursor (polyamic acid)), an acrylic resin, a phenol resin, a polyester resin, a polyolefin resin, a modified polyphenylene ether resin, a bismaleimide resin, a polyfunctional cyanate ester resin, a polyfunctional maleimide-cyanate ester resin, a polyfunctional maleimide resin, a vinyl ester resin, a urea resin, a diallyl phthalate resin, a melamine resin, a guanidine resin, and a melamine-urea copolymer resin), hot-melt resins (e.g., a polyester resin, a polyolefin resin, a polystyrene resin, a polycarbonate, a thermoplastic polyimide, a polyarylate, a polysulfone, a polyallyl sulfone, an aromatic polyamide, an aromatic polyether amide, a polyphenylene sulfide, a polyallyl ether ketone, a polyamide imide, a liquid crystalline polyester, and a polyphenylene ether), and a reactive alkoxysilane. These resins may be used singly or in combination of two or more kinds thereof.

Examples of another additive can include a crosslinking agent, a crosslinking aid, a filler, a weathering agent, an antioxidant, a colorant, an oil resistance improver, a processing aid, a dispersion aid, a plasticizer, and a flame retardant.

The fluororesin insulating layer of the flat insulated electric wire of the disclosure is preferably formed by extruding a mixture containing the fluorine-containing polymer (A) resin, the fluorine-containing polymer (B) resin, and the powder of the metal oxide. The mixture is preferably composed of the fluorine-containing polymer (A) resin, the fluorine-containing polymer (B) resin, and the powder of the metal oxide.

The above-described mixture is obtained by mixing certain amounts of the fluorine-containing polymer (A) resin and the metal oxide powder, and then adding this mixture to the fluorine-containing polymer (B), which is used as a matrix resin.

Regarding the content of each component, the blending amount of the fluorine-containing polymer (A) is preferably from 10 to 25 parts by mass, and more preferably from 10 to 20 parts by mass with respect to 100 parts by mass of the blending amount of the fluorine-containing polymer (B). Incorporation of the fluorine-containing polymer (A) having a carbonyl-containing group at or above this lower limit can enhance the adhesion between the fluororesin insulating layer and the flat conductor. Incorporation of the fluorine-containing polymer (A) at or below the upper limit enhances the adhesion to the flat conductor, while having no significant influence on the physical properties of the fluorine-containing polymer (B), such as insulation properties, heat resistance, corona resistance, and ATF oil resistance. The mass ratio of the fluorine-containing polymer (A) to the metal oxide is preferably from 3.5 : 1 to 5.5 : 1. Appropriate synergy of the carbonyl-containing group of the fluorine-containing polymer (A) and the metal oxide within this range can enhance the adhesion between the fluororesin insulating layer and the flat conductor, and can significantly enhance the bending resistance and workability of the insulated electric wire. The mass ratio of the fluorine-containing polymer (A) to the metal oxide is more preferably from 4 : 1 to 5 : 1 from the perspective of further enhancement of the bending resistance and workability of the insulated electric wire.

When the above-described mixture is melt-kneaded and extrusion molded, the metal oxide and the carbonyl-containing group of the fluorine-containing polymer (A) chemically react vigorously. When the content of the metal oxide is appropriate, the amount of bubbles generated in the fluororesin insulating layer is suppressed, and the appearance, thickness uniformity, insulation properties, and the like of the insulating layer are enhanced. In order to avoid the above-described situation, it is preferable to add the metal oxide at an appropriately low content, and for example, the blending amount of the metal oxide is preferably, for example, from 2 to 7 parts by mass, and more preferably from 2 to 5 parts by mass with respect to 100 parts by mass of the blending amount of the fluorine-containing polymer (B).

Regarding a method of the extrusion, for example, a screw extruder is used, in which an extrusion die similar to the cross-sectional shape of the flat conductor can be used. A molten fluororesin insulating layer material containing the fluorine-containing polymer (A) resin, the fluorine-containing polymer (B) resin, and the metal oxide is co-extruded with the flat conductor, and the flat electric wire is covered with the fluororesin insulating layer material to form the flat insulated electric wire.

The temperature of the die during the extrusion molding is preferably from 320°C to 420°C, and more preferably from 330°C to 400°C. Setting the temperature of the die at or above this lower limit allows the workability to be excellent, and setting the temperature of the die to be at or below the upper limit can suppress heat decomposition of the fluororesin component.

In the flat insulated electric wire of the disclosure, the thickness of the fluororesin insulating layer obtained by the melt extrusion molding is preferably from 50 to 180 µm, more preferably from 80 to 150 µm, and still more preferably from 100 to 120 µm.

The relative permittivity of the fluororesin insulating layer of the flat insulated electric wire of the disclosure described above is 2.5 or less, and preferably 2.3 or less. The relative permittivity within this range indicates that the insulation performance of the flat insulated electric wire is excellent. Further, in the flat insulated electric wire of the disclosure, the partial discharge inception voltage (PDIV) measured based on the national standard GB/T 7354-2018 high voltage test technique (partial discharge measurement) is 1500 V or more, the result of the corona resistance evaluation measured in accordance with the insulation specification of the national standard GB/T 21707-2018 variable frequency variable speed dedicated three-phase asynchronous motor is 300 Hr or more, and the dielectric breakdown voltage can reach 10 kV, from which it can be seen that the flat insulated electric wire of the disclosure has excellent insulation properties. In addition, the bending workability, aging resistance, ATF resistance, and appearance of the flat insulated electric wire are significantly improved as compared with an enamel magnet wire with polyimide (PI), polyetherimide (PEI), or the like as the insulating material. Therefore, the flat insulated electric wire of the disclosure is an insulated flat wire product with extremely high overall performance, which has excellent insulation properties, aging resistance, and corrosion resistance, as well as has excellent bending resistance and adhesion to the flat wire conductor. The flat insulated electric wire of the disclosure is suitable for various electric and electronic devices, including rotating motors such as a generator and an electric motor, particularly for a coil for a motor, a transformer, or the like, and particularly for a coil for a drive motor of a hybrid vehicle (HV), an electric vehicle (EV), a subway, or a high-speed railway.

### [Examples]

Hereinafter, the present disclosure will be described specifically with reference to Examples, but the disclosure is not limited to these Examples.

The measurement or test methods and materials used in Examples are shown below.

### < Raw Materials Used >

### (1) Fluorine-Containing Polymer (A)

Fluorine-containing polymer (A): copolymer containing a TFE unit, NAH unit, and PPVE unit in the order of 97.9 mol%, 0.1 mol%, and 2.0 mol%, respectively [Melting point 300°C, relative permittivity 2.0, MFR 16 g/10 min]

### (2) Fluorine-Containing Polymer (B)

Tetrafluoroethylene/perfluoroalkyl vinyl ether copolymer (PFA) [Trade name Fluon (registered trademark) PFA P-63P, manufactured by AGC Inc., melting point 308°C, relative permittivity 2.1, MFR 12 g/10 min].

Ethylene/tetrafluoroethylene copolymer (ETFE) [Trade name Fluon (registered trademark) ETFE C-88AXP, manufactured by AGC Inc., melting point 260°C, relative permittivity 2.5, MFR 9 g/10 min]

Tetrafluoroethylene/hexafluoropropylene copolymer (FEP) [Trade name NEOFLON FEP NP-120, manufactured by Daikin Industries, Ltd., melting point 265°C, relative permittivity 2.1, MFR 7 g/10 min]

### (3) Thermosetting Resin

Polyimide (PI) [Trade name TONGTHERM (registered trademark) 537, manufactured by ELANTAS, varnish, PI relative permittivity 3.4]

Polyetherimide (PEI) [Trade name TONGVAR (registered trademark) 325, manufactured by ELANTAS, varnish, PEI relative permittivity 3.2]

### (4) Thermoplastic Resin

Polyether ether ketone (PEEK) [Trade name VICTREX (registered trademark) PEEK, manufactured by Victrex plc., relative permittivity 3.1, melting point 343°C, MFR 7 g/10 min]

Polyether ketone ketone (PEKK) [Trade name KSTONE (registered trademark) CC 5601-50, manufactured by Shandong Kaisheng New Materials Co., Ltd., relative permittivity 3.1, melting point 310°C, MFR 22 g/10 min]

### (5) Metal Oxide

CuO: average particle diameter 3 µm, purity 99.9%, Shanghai Naiou Nano Technology Co., Ltd.

Cu₂O: average particle diameter 4.5 µm, purity 99.9%, Shanghai Naiou Nano Technology Co., Ltd.

MgO: average particle diameter 4 µm, purity 99.9%, Shanghai Naiou Nano Technology Co., Ltd.

CrO: average particle diameter 4.5 µm, purity 99.9%, Shanghai Naiou Nano Technology Co., Ltd.

### (6) Flat Conductor

Flat conductor: a copper wire with a rectangular cross section (3.2 mm long side × 1.5 mm short side, curvature radius r of rounding of four corners = 0.3 mm) (oxygen content in copper 15ppm) (manufactured by Jiangxi Copper Corporation Limited (JCC))

### < Relative Permittivity >

The relative permittivity of an insulating layer resin was determined by the following method.

### 1) Preparation of Resin Sample

The fluorine-containing polymer (A), the fluorine-containing polymer (B), and the metal oxide were mixed at high speed and pelletized by a twin-screw extruder to obtain fluorine-containing composite resin pellets. Next, the fluorine-containing composite resin particles were spread evenly on a die, and melt-press-molded at 350°C. An apparatus used was a 50T tablet press-molding machine (manufactured by a Dongguan bolon manufacturer, model BL-6170-B-50T), by which 1 MPa was applied for 5 minutes and degassing was performed five times, then 4 MPa was applied for 3 minutes, and cooling to room temperature within 15 minutes was performed at 4 MPa to prepare a plate that is about 13 × 13 × 0.1 cm.

### 2) Measurement of Relative Permittivity

The obtained resin sample was tested using a dielectric impedance analyzer (manufactured by Keysight Technologies, Inc.; device name, dielectric impedance analyzer E4980A), and the obtained value was taken as a relative permittivity. The test was performed under the conditions of a frequency of 1 MHz, an accuracy of 0.1%, a test environment with 23 ± 1°C and a relative humidity of 50% ± 5% RH.

### [Example 1]

A flat conductor (copper having an oxygen content of 15 ppm) with a rectangular cross-section (3.2 mm long side × 1.5 mm short side, curvature radius r of the fillet of four corners = 0.3 mm) was used as a conductor.

The fluorine-containing polymer (A), the PFA as the fluorine-containing polymer (B), and the CuO powder as the metal oxide were weighed in the proportions described below, mixed uniformly, and then pelletized to obtain a pellet mixture (a1). Using an extruder having a 30 mm full screw (screw L/D = 25, screw compression ratio = 3) and using an extrusion die with a cross-sectional shape similar to that of the conductor, the mixture (a1) was charged into the extruder and subjected to extrusion covering at 350°C (temperature of the extrusion die) to obtain a flat insulated electric wire (w1) in which a 120 µm-thick fluororesin insulating layer was formed on the outside of the flat conductor.

The mass ratio of each component in the mixture (a1) is shown below.

| | |
|---|---|
| PFA | 100 parts by mass |
| Fluorine-containing polymer (A) | 10 parts by mass |
| CuO | 2 parts by mass |

### [Example 2]

The fluorine-containing polymer (A), the PFA as the fluorine-containing polymer (B), and the CuO powder as the metal oxide were weighed in the proportions described below, mixed uniformly, and then pelletized to obtain a pellet mixture (a2). A flat insulated electric wire (w2) in which a 120 µm-thick fluororesin insulating layer was formed on the outside of the flat conductor was obtained in a manner similar to Example 1 except that the mixture (a2) was used instead of the mixture (a1).

The mass ratio of each component in the mixture (a2) is shown below.

| | |
|---|---|
| PFA | 100 parts by mass |
| Fluorine-containing polymer (A) | 25 parts by mass |
| CuO | 5 parts by mass |

### [Example 3]

The fluorine-containing polymer (A), the PFA as the fluorine-containing polymer (B), and a mixed powder of the CuO, Cu₂O, and MgO as the metal oxide were weighed according to the proportions below, mixed uniformly, and then pelletized to obtain a pellet mixture (a3). A flat insulated electric wire (w3) in which a 120 µm-thick fluororesin insulating layer was formed on the outside of the flat conductor was obtained in a manner similar to Example 1 except that the mixture (a3) was used instead of the mixture (a1).

The mass ratio of each component in the mixture (a3) is shown below.

| | |
|---|---|
| PFA | 100 parts by mass |
| Fluorine-containing polymer (A) | 20 parts by mass |
| CuO | 2 parts by mass |
| Cu₂O | 2 parts by mass |
| MgO | 1 part by mass |

### [Example 4]

The fluorine-containing polymer (A), the ETFE as the fluorine-containing polymer (B), and the CuO powder as the metal oxide were weighed in the proportions described below, mixed uniformly, and then pelletized to obtain a pellet mixture (a4). A flat insulated electric wire (w4) in which a 120 µm-thick fluororesin insulating layer was formed on the outside of the flat conductor was obtained in a manner similar to Example 1 except that the mixture (a4) was used instead of the mixture (a1).

The mass ratio of each component in the mixture (a4) is shown below.

| | |
|---|---|
| ETFE | 100 parts by mass |
| Fluorine-containing polymer (A) | 10 parts by mass |
| Cu₂O | 2 parts by mass |

### [Example 5]

The fluorine-containing polymer (A), the FEP as the fluorine-containing polymer (B), and a mixed powder of the CuO, Cu₂O, and CrO as the metal oxide were weighed according to the proportions below, mixed uniformly, and then pelletized to obtain a pellet mixture (a5). A flat insulated electric wire (w5) in which a 120 µm-thick fluororesin insulating layer was formed on the outside of the flat conductor was obtained in a manner similar to Example 1 except that the mixture (a5) was used instead of the mixture (a1).

The mass ratio of each component in the mixture (a5) is shown below.

| | |
|---|---|
| FEP | 100 parts by mass |
| Fluorine-containing polymer (A) | 25 parts by mass |
| CuO | 1 part by mass |
| Cu₂O | 3 parts by mass |
| CrO | 1 part by mass |

### [Comparative Example 1]

The fluorine-containing polymer (A), the PFA as the fluorine-containing polymer (B), and the CuO powder as the metal oxide were weighed in the proportions described below, mixed uniformly, and then pelletized to obtain a pellet mixture (b1). A flat insulated electric wire (wb1) in which a 120 µm-thick fluororesin insulating layer was formed on the outside of the flat conductor was obtained in a manner similar to Example 1 except that the mixture (b1) was used instead of the mixture (a1).

The mass ratio of each component in the mixture (b1) is shown below.

| | |
|---|---|
| PFA | 100 parts by mass |
| Fluorine-containing polymer (A) | 35 parts by mass |
| CuO | 5 parts by mass |

### [Comparative Example 2]

The fluorine-containing polymer (A), the PFA as the fluorine-containing polymer (B), and the CuO powder as the metal oxide were weighed in the proportions described below, mixed uniformly, and then pelletized to obtain a pellet mixture (b2). A flat insulated electric wire (wb2) in which a 120 µm-thick fluororesin insulating layer was formed on the outside of the flat conductor was obtained in a manner similar to Example 1 except that the mixture (b2) was used instead of the mixture (a1).

The mass ratio of each component in the mixture (b2) is shown below.

| | |
|---|---|
| PFA | 100 parts by mass |
| Fluorine-containing polymer (A) | 5 parts by mass |
| CuO | 5 parts by mass |

### [Comparative Example 3]

The fluorine-containing polymer (A), the PFA as the fluorine-containing polymer (B), and the CuO powder as the metal oxide were weighed in the proportions described below, mixed uniformly, and then pelletized to obtain a pellet mixture (b3). A flat insulated electric wire (wb3) in which a 120 µm-thick fluororesin insulating layer was formed on the outside of the flat conductor was obtained in a manner similar to Example 1 except that the mixture (b3) was used instead of the mixture (a1).

The mass ratio of each component in the mixture (b3) is shown below.

| | |
|---|---|
| PFA | 100 parts by mass |
| Fluorine-containing polymer (A) | 25 parts by mass |
| CuO | 8 parts by mass |

### [Comparative Example 4]

The fluorine-containing polymer (A), the PFA as the fluorine-containing polymer (B), and the MgO powder as the metal oxide were weighed in the proportions described below, mixed uniformly, and then pelletized to obtain a pellet mixture (b4). A flat insulated electric wire (wb4) in which a 120 µm-thick fluororesin insulating layer was formed on the outside of the flat conductor was obtained in a manner similar to Example 1 except that the mixture (b4) was used instead of the mixture (a1).

The mass ratio of each component in the mixture (b4) is shown below.

| | |
|---|---|
| PFA | 100 parts by mass |
| Fluorine-containing polymer (A) | 20 parts by mass |
| MgO | 1 part by mass |

### [Comparative Example 5]

The fluorine-containing polymer (A), the FEP as the fluorine-containing polymer (B), and the Cu₂O powder as the metal oxide were weighed in the proportions described below, mixed uniformly, and then pelletized to obtain a pellet mixture (b5). A flat insulated electric wire (wb5) in which a 120 µm-thick fluororesin insulating layer was formed on the outside of the flat conductor was obtained in a manner similar to Example 1 except that the mixture (b5) was used instead of the mixture (a1).

The mass ratio of each component in the mixture (b5) is shown below.

| | |
|---|---|
| FEP | 100 parts by mass |
| Fluorine-containing polymer (A) | 25 parts by mass |
| Cu₂O | 15 parts by mass |

### [Comparative Example 6]

The fluorine-containing polymer (A), the FEP as the fluorine-containing polymer (B), and the Cu₂O powder as the metal oxide were weighed in the proportions described below, mixed uniformly, and then pelletized to obtain a pellet mixture (b6). A flat insulated electric wire (wb6) in which a 120 µm-thick fluororesin insulating layer was formed on the outside of the flat conductor was obtained in a manner similar to Example 1 except that the mixture (b6) was used instead of the mixture (a1).

The mass ratio of each component in the mixture (b6) is shown below.

| | |
|---|---|
| FEP | 100 parts by mass |
| Fluorine-containing polymer (A) | 25 parts by mass |
| Cu₂O | 2 parts by mass |

### [Comparative Example 7]

Using the same flat conductor as in Example 1 as a conductor, as well as using a die with a cross-sectional shape similar to that of the conductor, the polyimide (PI) varnish (trade name TONGTHERM (registered trademark) 537) was applied to the surface of the flat conductor, which was then passed through a natural convection oven with a length of 5 m and a furnace temperature set to 350°C in a passage time at a speed of 10 m/s. This operation was repeated multiple times (from 20 to 30 times) until the insulating resin layer met the predetermined thickness condition, and as a result, a flat insulated electric wire (wb7) in which a 120 µm-thick PI thermosetting resin layer was formed on the outside of the flat conductor was obtained.

### [Comparative Example 8]

A flat insulated electric wire (wb8) in which a 120 µm-thick PEI thermosetting resin layer was formed on the outside of the flat conductor was obtained in a manner similar to Comparative Example 7 except that the polyetherimide (PEI) varnish (trade name TONGVAR (registered trademark) 325) was used instead of the polyimide (PI) varnish in Comparative Example 7.

### [Comparative Example 9]

A flat insulated electric wire (wb9) in which a 120 µm-thick PEEK thermoplastic resin layer was formed on the outside of the flat conductor was obtained in a manner similar to Example 1 except that the flat conductor was subjected to extrusion covering at 370°C (temperature of extrusion die) directly using the thermoplastic resin PEKK (trade name VICTREX (registered trademark) PEEK).

### [Comparative Example 10]

A flat insulated electric wire (wb10) in which a 120 µm-thick PEKK thermoplastic resin layer was formed on the outside of the flat conductor was obtained in a manner similar to Example 1 except that the flat conductor was subjected to extrusion covering at 370°C (temperature of extrusion die) directly using the thermoplastic resin PEKK (trade name KSTONE (registered trademark) CC 5601-50).

### [Comparative Example 11]

A flat insulated electric wire (wb11) in which a 120 µm-thick PFA thermoplastic resin layer was formed on the outside of the flat conductor was obtained in a manner similar to Example 1 except that the flat conductor was subjected to an extrusion covering step at 360°C (temperature of extrusion die) using the thermoplastic resin PFA (trade name Fluon (registered trademark) PFA P-63P) singly as the fluorine-containing polymer (B).

### [Comparative Example 12]

A flat insulated electric wire (wb12) in which a 120 µm-thick ETFE thermoplastic resin layer was formed on the outside of the flat conductor was obtained in a manner similar to Example 1 except that the flat conductor was subjected to extrusion covering at 340°C (temperature of extrusion die) using the thermoplastic resin ETFE (trade name Fluon (registered trademark) ETFE C-88AXP) singly as the fluorine-containing polymer (B).

### <Measurement and Evaluation>

For each of the flat insulated electric wires obtained in Examples 1 to 5 and Comparative Examples 1 to 12 mentioned above, evaluation was conducted for the adhesion between the resin insulating layer and the conductor (conductor adhesion), the partial discharge inception voltage (PDIV), the corona resistance, the breakdown voltage, the bending workability, the heat-aging resistance, and the ATF resistance by the following tests, and the appearance of each insulated electric wire was visually observed.

### [Conductor Adhesion Test]

The adhesion between the conductor and the insulating layer in the insulated electric wire was evaluated by the following bending test.

A Linear test sample with a length of 300 mm were cut out from each of the prepared insulated electric wires. In the central part of the insulating layer on the end surface side of the linear test piece, a scratch (cut) with a depth of about 5 µm and a length of about 2 µm was made in the longitudinal direction and the vertical direction, respectively, using a dedicated jig (at this time, the insulating layer and the conductor were firmly in close contact with each other, and were not peeled off). With this scratch as a vertex, the linear test piece was bent by 180 degrees (U-shape) around an iron core with a diameter of 1.0 mm, and this state was maintained for 5 minutes. The progress of peeling between the conductor and the insulating layer generated around the vertex of the linear test piece was visually observed.

The test was performed five times, and evaluation was conducted according to the following criteria.
A: The scratch did not expand in all five tests, and the insulating layer was not peeled off from the conductor.
B: At least one scratch formed on the insulating layer expanded in one out of five tests, and the insulating layer was peeled off from the conductor.
C: At least one scratch formed on the insulating layer expanded in two out of five tests, and the insulating layer was peeled off from the conductor.
D: At least one scratch formed on the insulating layer expanded in three or more out of five tests, and the insulating layer was peeled off from the conductor.

### [Evaluation of Partial Discharge Inception Voltage (PDIV)]

The measurement of the partial discharge inception voltage was performed by entrusting to Shanghai Baiken Testing Technology Service Co., Ltd. The adopted test method is in accordance with the national standard GB/T 7354-2018 high voltage test technique (partial discharge measurement). A production method for a flat wire sample followed 5.1.2 of the national standard GB/T 4074.7-2009, and a flat wire sample was prepared by a "back-to-back" manner. An AC voltage with a 50 kHz sine wave was applied to the prepared flat wire sample, and the measurement was conducted. The boost was set to a constant speed of 20 V/sec, and when a partial discharge of 100 PC occurred, the voltage peak value of the partial discharge was read. The measurement temperature was set to 40°C, the insulated electric wire was placed in a constant temperature chamber set at the predetermined temperature, and measurement was conducted when the temperature became constant.

The obtained results were evaluated according to the following evaluation criteria.
A: 1500 V or more
B: 1200 V or more but less than 1500 V
C: 1000 V or more but less than 1200 V
D: less than 1000 V

### [Evaluation of Corona Resistance]

The measurement of the corona resistance was performed by entrusting to Shanghai Baiken Testing Technology Service Co., Ltd. The adopted test method is in accordance with the insulation specification of the national standard GB/T 21707-2018 variable frequency variable speed dedicated three-phase asynchronous motor. A production method for a flat wire sample followed 5.1.2 of the national standard GB/T 4074.7-2009, and a flat wire sample was prepared by a "back-to-back" manner. An AC voltage of 3KV with a 20 kHz sine wave was applied between the two conductors, with the rise time of the shock wave set to 100 ns and the measurement temperature set to 155°C, the insulated electric wire was placed in a constant temperature chamber set at the predetermined temperature, and the measurement was conducted when the temperature became constant.

The obtained results were evaluated according to the following evaluation criteria.
A: 300 Hr or more
B: 200 Hr or more but less than 300 Hr
C: 72 Hr or more but less than 200 Hr
D: less than 72 hours

### [Evaluation of Dielectric Breakdown Voltage]

A flat wire was cut out into a length of about 350 mm, and horizontally attached to a core with a diameter of 50 mm along the short side direction and bent into a U shape, and the breakdown voltage of the bent part was measured by a steel ball method. Ten samples were taken and subjected to the breakdown voltage test, and the obtained results were evaluated according to the following evaluation criteria.
A: At least nine out of the ten samples all satisfied the condition of breakdown voltage ≥ 10 kV.
B: At least nine out of the ten samples all satisfied the condition of breakdown voltage ≥ 8 kV.
C: At least nine out of the ten samples all satisfied the condition of breakdown voltage ≥ 6 kV.
D: One out of the ten samples failed due to a breakdown voltage of less than 5 kV

### [Evaluation of Bending Workability]

With respect to the bending workability, the insulating layer is stretched by 10%, and the linear insulated flat wire is bent by 180° (U-shape) around an iron core with a diameter of 1.0 mm and is checked for the presence or absence of breakage of the insulating layer at the vertex of the bent part.

The obtained results were evaluated according to the following evaluation criteria.
A: No breakage was observed in the insulating layer at the vertex of the bent part when the insulating layer was stretched by 30%.
B: No breakage was observed when the insulating layer was stretched by 20%, but breakage was observed by 30%.
C: No breakage was observed when the insulating layer was stretched by 10%, but breakage was observed by 20%.
D: There is breakage.

### [Evaluation of Heat-Aging Resistance]

For the heat-aging resistance, a linear insulated flat wire was provided, heat-treated at a constant temperature of 260°C, and checked for the presence or absence of a crack on the electric wire surface after heating for a predetermined time.

The obtained results were evaluated according to the following evaluation criteria.
A: a state in which no crack is present on the surface of the flat wire heated for 500 hours
B: a state in which no crack is present on the surface of the flat wire heated for 250 hours
C: a state in which no crack is present on the surface of the flat wire heated for 100 hours
D: a state in which a crack is present on the surface of the flat wire heated for 100 hours

### [ATF Resistance Test]

A linear test piece with a length of 300 mm was cut out from the insulated electric wire and placed in a stainless steel sealed container. The stainless steel sealed container was charged with 1300 g of an automatic transmission fluid (ATF oil: Automatic Transmission Oil) and 6.5 ml (corresponding to 0.5 mass%) of water, and was heated at 150°C for 500 hours. After the heating, the insulated electric wire was taken out and allowed to stand until reaching 25°C (room temperature). After reaching 25°C, the insulated electric wire was bent by 180° around a 1.0 mm iron core, and the presence or absence of a crack in the insulating layer of the insulated electric wire was visually observed and evaluated according to the following evaluation criteria.
A: No crack was found in the insulating layer (including the thermosetting resin layer, or the thermoplastic resin layer when the thermoplastic resin layer is provided) of the insulated electric wire.
B: A slight crack was found in the insulating layer (including the thermosetting resin layer, or the thermoplastic resin layer when the thermoplastic resin layer is provided) of the insulated electric wire, but the crack did not reach the conductor.
C: A crack reaching the conductor was found in the insulating layer (including the thermosetting resin layer, or the thermoplastic resin layer when the thermoplastic resin layer is provided) of the insulated electric wire.

### [Overall Evaluation]

When the above-described evaluation items are all A or B, the overall evaluation is determined as "pass ", and when at least one of the evaluation items is C or D, the overall evaluation is determined as" fail ".

The composition of the mixtures of Examples 1 to 5 and Comparative Examples 1 to 12 and the obtained results of the performance evaluation of the flat insulated electric wire are summarized in Tables 1 and 2.

In Tables 1 and 2, a "-" or a blank indicates unused, a value of 0, or no evaluation conducted due to the absence of the layer of interest.

**[Table 1]**

| | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Fluorine-containing polymer (A) (parts by mass) | | 10 | 25 | 20 | 10 | 25 | 35 | 5 | 25 | 20 | 25 | 25 |
| Fluorine-containing polymer (B) (parts by mass) | PFA | 100 | 100 | 100 | | | 100 | 100 | 100 | 100 | | |
| | ETFE | | | | 100 | | | | | | | |
| | FEP | | | | | 100 | | | | | 100 | 100 |
| Metal oxide (parts by mass) | CuO | 2 | 5 | 2 | | 1 | 5 | 5 | 8 | | | |
| | Cu₂O | | | 2 | 2 | 3 | | | | | 15 | 2 |
| | MgO | | | 1 | | | | | | 1 | | |
| | CrC | | | | | 1 | | | | | | |
| Mass ratio of fluorine-containing polymer (A) : metal oxide | | 5:01 | 5:01 | 4:01 | 5:01 | 5:01 | 7:01 | 1:01 | 3.1:1 | 20:01 | 1.7:1 | 12.5:1 |
| | Relative permittivity (Dk, 1 MHz) | 2.1 | 2.2 | 2.2 | 2.3 | 2.3 | 2.5 | 2.2 | 2.6 | 2.1 | 2.7 | 2,2 |
| | Thickness of insulating layer (µm) | 120 | 120 | 120 | 120 | 120 | 120 | 120 | 120 | 120 | 120 | 120 |
| | Appearance of insulating layer | Smooth and uniform | Smooth and uniform | Smooth and uniform | Smooth and uniform | Smooth and uniform | Uneven and bubbles | Smooth and uniform | Uneven and bubbles | Smooth and uniform | Uneven and bubbles | Smooth and uniform |
| Evaluation items | Conductor adhesion | A | A | A | A | A | A | C | A | C | A | C |
| | PDIV | A | A | A | A | A | B | A | B | A | B | A |
| | Breakdown voltage | A | A | A | A | A | C | A | C | A | D | A |
| | Corona resistance (Hr) | > 300 | > 300 | > 300 | > 300 | > 300 | 150 | 200 | 150 | 200 | 100 | 200 |
| | Bending workability | A | A | A | A | A | A | B | A | B | B | B |
| | Heat-aging resistance | A | A | A | A | A | B | A | B | A | C | A |
| | ATF resistance | A | A | A | A | A | B | A | B | A | C | A |
| Overall evaluation | | Pass | Pass | Pass | Pass | Pass | Fail | Fail | Fail | Fail | Fail | Fail |

**[Table 2]**

| | | Example 2 | Example 4 | Comparative Example 7 | Comparative Example 8 | Comparative Example 9 | Comparative Example 10 | Comparative Example 11 | Comparative Example 12 |
|---|---|---|---|---|---|---|---|---|---|
| Insulating layer | Processing method | Extruding | Extruding | Enameling | Enameling | Extruding | Extruding | Extruding | Extruding |
| | Resin type | Fluorine-containing polymer (A)/PFA/CuO | Fluorine-containing polymer (A)/ETFE/ Cu₂O | PI | PEI | PEEK | PEKK | PFA | ETFE |
| | MFR (g/10 min) | 8.9 | 12.2 | - | - | 7 | 22 | 12 | 9 |
| | Relative permittivity (Dk, 1 MHz) | 2.2 | 2.3 | 3.4 | 3.2 | 3.1 | 3.2 | 2.1 | 2.6 |
| | Thickness of insulating layer (µm) | 120 | 120 | 120 | 120 | 120 | 120 | 120 | 120 |
| Evaluation items | Conductor adhesion | A | A | B | B | C | C | C | C |
| | PDIV | A | A | C | C | B | B | A | A |
| | Breakdown voltage | A | A | C | C | B | B | B | B |
| | Corona resistance (Hr) | > 300 | > 300 | 102 | 89 | 170 | 180 | 252 | 243 |
| | Bending workability | A | A | B | B | C | C | C | C |
| | Heat-aging resistance | A | A | B | B | B | B | B | B |
| | ATF resistance | A | A | C | C | B | B | B | B |
| Overall evaluation | | Pass | Pass | Fail | Fail | Fail | Fail | Fail | Fail |

As can be seen from Table 1, in Examples 1 to 5, the flat wire samples in which the mixture composed of the fluorine-containing polymer (A), the fluorine-containing polymer (B), and the metal oxide is used as the insulating layer all have a PDIV of 1500 V or more and satisfy the highest requirement demanded for an 800 V motor, as well as have a remarkably enhanced adhesion of the insulating layer material to the copper conductor, and thus have excellent conductor adhesion. In addition, the flat wire samples with a 120 µm-thick insulating layer were tested for the performance required for a motor, and the insulation performance such as breakdown voltage (10 kV or more) and corona resistance (300 hours or more), the bending resistance, the heat-aging resistance, and the ATF resistance of each flat wire sample of Examples all successfully met the performance demanded for a motor equipment.

In Comparative Example 1, the content of the fluorine-containing polymer (A) contained in the insulating layer is too large, which affects the properties such as insulation properties and corrosion resistance of the fluorine-containing polymer (B) itself, and the insulation properties such as PDIV, breakdown voltage, and corona resistance of the flat wire sample were deteriorated, and the heat-aging resistance and the ATF resistance were remarkably deteriorated.

The content of the fluorine-containing polymer (A) contained in the insulating layer of Comparative Example 2 was too small, and the fluorine-containing polymer (A) did not sufficiently contribute to enhancement of the adhesion between the insulating layer and the conductor, resulting in low conductor adhesion and poor bending workability, whereby the high overall performance required by the present invention was not obtained.

In Comparative Examples 3 and 5, the mass ratios of the fluorine-containing polymer (A) to the metal oxide were 3.1 : 1 and 1.7 : 1, respectively, which were lower than the lower limit (3.5 : 1) of the claimed scope of protection in the present disclosure, that is, the relative content of the metal oxide was higher than the claimed scope of protection in the disclosure. In this case, the fluorine-containing polymer (A) and the metal oxide were vigorously chemically reacted at a high temperature during extruding, and a large amount of bubbles were generated in the insulating layer, causing undesirable phenomena such as poor appearance and nonuniformity of the thickness of the insulating layer and deterioration of the insulation properties.

In Comparative Examples 4 and 6, the mass ratios of the fluorine-containing polymer (A) to the metal oxide are 20 : 1 and 12.5 : 1, respectively, which are higher than the upper limit (5.5 : 1) of the claimed scope of protection in the disclosure, that is, the relative content of the metal oxide is lower than the claimed scope of protection in the disclosure. In this case, the joining effect due to the chemical bond between the fluorine-containing polymer (A) and the metal oxide is insufficient, resulting in poor adhesion between the insulating layer and the copper conductor, and poor bending workability. The insulating layer is thereby likely to be peeled off from the copper conductor after being bent by 180° when the flat wire is formed into a hair-pin shape, which directly affects the insulation performance of the flat wire product and the service life when the flat wire product is applied to a motor.

As can be seen from Table 2 above described, the insulated flat wires of the disclosure of Examples 1 to 5, particularly Examples 2 and 4 are insulated flat wire products with extremely high overall performance, which satisfy the highest requirement of the PDIV among 800 V motors and excel in all of the insulation performance such as conductor adhesion, breakdown voltage (10 kV or more), and corona resistance (300 hours or more), the bending resistance, the heat-aging resistance, and the ATF resistance, by adopting the specific fluorine-containing polymer and the metal oxide and designing the formulation, as compared with the insulated flat wires of Comparative Examples 7 to 12.

On the other hand, Comparative Examples 7 and 8 each show properties of the enameled wire with the PI or PEI insulating resin layer usually used in currently commercially available 400 V motors, in which the PDIV measurement results do not reach PDIV values exceeding 1200 V required for an 800 V motor (evaluated as C), and thus the basic requirement of an 800 V high-voltage motor is not met, and the insulation properties such as breakdown voltage and corona resistance, and the ATF oil resistance property are also poor.

Comparative Examples 9 and 10 each show the extrusion-molded insulated flat wire in which the thermal resistant aromatic crystalline resin represented by PEEK or PEKK is used as the insulating layer, and the PDIV values satisfy the requirement of 1200 V. However, since PEEK and PEKK are both rigid polymers, the bending workability and the flexibility are inferior, and therefore the insulated flat wires have poor workability, unsatisfying the requirements. When such insulated flat wires are extrusion molded and later bent into hairpin structures, cracks, wrinkles, and delamination phenomena are likely to occur, which seriously affects the insulation performance of flat wire products.

Comparative Examples 11 and 12 each show the insulated flat wire in which the fluorine-containing polymer PFA or ETFE is used singly as the insulating layer. These insulating flat wires also have a high PDIV value and can satisfy the requirements for the electrical properties of an 800 V motor. However, the surface energy of the fluorine-containing polymer is low, and the force of joining with the copper conductor is very poor, as a result of which, the flat wire insulating layer is likely to peel off from the inner core of the copper conductor after cutting and bending, and the bending workability is poor, which affects the results of other subsequent performance tests.

Finally, it should be understood that the descriptions of the above-mentioned embodiments and Examples are illustrative in all respects and do not limit the present disclosure, and those skilled in the art can make various improvements without any creative efforts without departing from the spirit of the disclosure. The scope of the disclosure is defined by the claims, and is not defined by the above-described embodiments or Examples. Further, the scope of the disclosure includes any modifications within the meaning and scope equivalent to the claims.

### INDUSTRIAL APPLICABILITY

The flat insulated electric wire of the present disclosure is an insulated flat wire product with extremely high overall performance, which has excellent insulation properties such as PDIV, breakdown voltage, and corona resistance, aging resistance, and ATF resistance, as well as has excellent bending resistance and adhesion to a flat wire conductor. The flat insulated electric wire of the disclosure is suitable for various electric and electronic devices, including rotating motors such as a generator and an electric motor, particularly for a coil for a motor, a transformer, or the like, and particularly for a coil for a drive motor of a hybrid vehicle (HV), an electric vehicle (EV), a subway, or a high-speed railway.

## Claims

1. A flat insulated electric wire, comprising:
a flat conductor having a substantially rectangular cross section; and
a fluororesin insulating layer covering the flat conductor,
wherein the fluororesin insulating layer contains a fluorine-containing polymer (A) having a carbonyl-containing group, a fluorine-containing polymer (B) having no carbonyl-containing group, and a metal oxide,
the fluorine-containing polymer (A) is a hot-melt tetrafluoroethylene copolymer having a carbonyl-containing group, and the carbonyl-containing group is at least one selected from the group consisting of a group having a carbonyl group between carbon atoms of a hydrocarbon group, a carbonate group, a carboxyl group, an alkoxycarbonyl group, and an anhydride residue,
a blending amount of the fluorine-containing polymer (A) is from 10 to 25 parts by mass with respect to 100 parts by mass of the fluorine-containing polymer (B), and
a mass ratio of the fluorine-containing polymer (A) to the metal oxide is from 3.5:1 to 5.5:1.

2. The flat insulated electric wire according to claim 1, **characterized in that** a mass ratio of the fluorine-containing polymer (A) to the metal oxide is from 4:1 to 5:1.

3. The flat insulated electric wire according to claim 1, **characterized in that** a blending amount of the metal oxide is from 2 to 5 parts by mass with respect to 100 parts by mass of the fluorine-containing polymer (B).

4. The flat insulated electric wire according to claim 1, **characterized in that** the fluororesin insulating layer is formed by extruding a mixture containing a resin of the fluorine-containing polymer (A), a resin of the fluorine-containing polymer (B), and a powder of the metal oxide.

5. The flat insulated electric wire according to any one of claims 1 to 4, **characterized in that** the fluorine-containing polymer (A) is a polymer containing a constitutional unit (a1) based on tetrafluoroethylene, a constituent unit (a2) based on a monomer having a carbonyl-containing group, and a constituent unit (a3) based on a fluorine-containing monomer other than tetrafluoroethylene.

6. The flat insulated electric wire according to claim 5, **characterized in that** the monomer having a carbonyl-containing group is a cyclic hydrocarbon compound having an anhydride residue and a polymerizable unsaturated bond.

7. The flat insulated electric wire according to claim 5, **characterized in that**, in the fluorine-containing polymer (A), a proportion of the constituent unit (a1) based on tetrafluoroethylene is from 90 to 99.89 mol%, a proportion of the constituent unit (a2) based on a monomer having a carbonyl-containing group is from 0.01 to 3 mol%, and a proportion of the constituent unit (a3) based on a fluorine-containing monomer other than tetrafluoroethylene is from 0.1 to 9.99 mol%, relative to a total of all units configuring the fluorine-containing polymer (A).

8. The flat insulated electric wire according to any one of claims 1 to 4, **characterized in that** the fluorine-containing polymer (A) has a melting point of from 280°C to 320°C and is melt- moldable.

9. The flat insulated electric wire according to any one of claims 1 to 4, **characterized in that** the fluorine-containing polymer (A) has a melt flow index of from 5 to 35 g/10 min.

10. The flat insulated electric wire according to any one of claims 1 to 4, **characterized in that** the fluorine-containing polymer (B) is at least one selected from the group consisting of ETFE, FEP, PFA, ECTFE, PCTFE, and PVDF.

11. The flat insulated electric wire according to any one of claims 1 to 4, **characterized in that** the metal oxide is at least one selected from the group consisting of CuO, ZnO, MgO, Cu₂O, Fe₃O₄, MnO₂, and CrO.

12. The flat insulated electric wire according to claim 2 or 3, **characterized in that** a powder of the metal oxide has an average particle size of from 0.1 to 5 µm.

13. The flat insulated electric wire according to any one of claims 1 to 4, **characterized in that** the fluororesin insulating layer has a thickness of from 50 to 180 µm.

14. The flat insulated electric wire according to any one of claims 1 to 4, **characterized in that** the flat conductor is formed from aluminum, an aluminum alloy, copper, or a copper alloy.
